# EUROPEAN PATENT APPLICATION

(11) **EP 2 053 495 A2**
(43) Date of publication of application: **29.04.2009**
(21) Application number: 08253439.7
(22) Date of filing: 22.10.2008
(51) Int. Cl.: G06F 3/044

(54) **Touch panel, method for making the same, and display device adopting the same**

(30) Priority: 23.10.2007 CN 200710202228; 14.12.2007 CN 200710125112; 14.12.2007 CN 200710125110; 14.12.2007 CN 200710125113; 12.12.2007 CN 200710125105; 14.12.2007 CN 200710125111; 12.12.2007 CN 200710125007; 12.12.2007 CN 200710125106; 12.12.2007 CN 200710125104; 27.12.2007 CN 200710305831; 27.12.2007 CN 200710305829; 27.12.2007 CN 200710305830; 21.12.2007 CN 200710125404; 19.09.2008 CN 200810216309; 04.07.2008 CN 200810068332; 22.08.2008 CN 200810142021; 22.08.2008 CN 200810142023
(71) Applicant: Tsinghua University, Haidian District Beijing (CN); Hon Hai Precision Co., Ltd, Tu-cheng City, Taipei Hsien Taiwan, ROC (CN)
(72) Inventor: Jiang, Kai-li Tsing Hua University, Haidan District, Beijing City (CN); Liu, Liang Tsing Hua University, Haidan District, Beijing City (CN); Liu, Chang-hong Tsing Hua University, Haidan District, Beijing City (CN); Li, Qun-qing Tsing Hua University, Haidan District, Beijing City (CN); Fan, Shou-shan Tsing Hua University, Haidan District, Beijing City (CN); Chen, Ga-lane, Santa-Clara City, California (US)
(74) Representative: Craven, Ian

(57) **Abstract**

A touch panel includes a base, a transparent conductive layer, and at least two separate electrodes. The base includes a first surface. The transparent conductive layer is formed on the first surface of the base. The transparent conductive layer includes a carbon nanotube structure. The electrodes are electrically connected with the transparent conductive layer. Further, a method for making the touch panel and a display device adopting the same are also included.

## Description

This application is related to a commonly-assigned application entitled, "TOUCH PANEL, METHOD FOR MAKING THE SAME, AND DISPLAY DEVICE ADOPTING THE SAME", filed **** (Atty. Docket No. EC318). The disclosure of the above-identified application is incorporated herein by reference.

### BACKGROUND

### 1. Field of the Invention

The present invention relates to touch panels, methods for making the same and display devices adopting the same and, particularly, to a carbon-nanotube-based touch panel, a method for making the same, and a display device adopting the same.

### 2. Discussion of Related Art

Following the advancement in recent years of various electronic apparatuses, such as mobile phones, car navigation systems and the like toward high performance and diversification, there has been continuous growth in the number of electronic apparatuses equipped with optically transparent touch panels in front of their respective display devices (e.g., a display such as a liquid crystal panel). A user of any such electronic apparatus operates it by pressing or touching the touch panel with a finger, a pen, a stylus, or a like tool while visually observing the display device through the touch panel. A demand thus exists for such touch panels that are superior in visibility and reliable in operation.

At present, different types of touch panels, including a resistance-type, a capacitance-type, an infrared-type, and a surface sound wave-type, have been developed. The capacitance-type touch panel has advantages such as higher accuracy and excellent transparency, and thus has been widely used.

A conventional capacitance-type touch panel includes a glass base, a transparent conductive layer, and four electrodes. The material of the transparent conductive layer is selected from a group consisting of indium tin oxide (ITO) and antimony tin oxide (ATO). The electrodes are made of metal and separately formed on a surface of the transparent conductive layer. Further, a transparent protective film is formed on the surface of the transparent conductive layer that faces away from the base. The material of the transparent protective film has insulative and transparent characteristics.

In operation, an upper surface of the touch panel is pressed/touched with a touch tool, such as a user's finger or an electrical pen/stylus. Concordantly, visual observation of a screen on the liquid crystal display device provided on a back side of the touch panel is allowed. In use, due to an electrical field of the user, a coupling capacitance forms between the user and the transparent conductive layer. For high frequency electrical current, the coupled capacitance is a conductor, and thus the touch tool takes away a little current from the touch point. Current flowing through the four electrodes cooperatively replaces the current lost at the touch point. The quantity of current supplied by the four electrodes is directly proportional to the distances from the touch point to the electrodes. A touch panel controller is used to calculate the proportion of the four supplied currents, thereby detecting coordinates of the touch point on the touch panel.

However, the optically transparent conductive layer (e.g., ITO layer) is generally formed by means of ion-beam sputtering, and this method is relatively complicated. Furthermore, the ITO layer has generally poor mechanical durability, low chemical endurance and uneven resistance over an entire area of the touch panel. Additionally, the ITO layer has relatively low transparency. All the above-mentioned problems of the ITO layer tend to yield a touch panel with low sensitivity, accuracy, and brightness.

What is needed, therefore, is to provide a durable touch panel with high sensitivity, accuracy, and brightness, a method for making the same, and a display device adopting the same.

### SUMMARY

A touch panel includes a base, a transparent conductive layer, and at least two separate electrodes. The base includes a first surface. The transparent conductive layer is formed on the first surface of the base. The transparent conductive layer includes a carbon nanotube layer, and the carbon nanotube layer includes a plurality of carbon nanotubes entangled with each other. The electrodes are separately disposed a surface of the transparent conductive layer and are electrically connected with the transparent conductive layer. Further, a method for making the same, and a display device adopting the same are also included.

Other advantages and novel features of the present touch panel, method for making the same, and display device adopting the same will become more apparent from the following detailed description of the present embodiments when taken in conjunction with the accompanying drawings.

### BRIEF DESCRIPTION OF THE DRAWINGS

Many aspects of the present touch panel, method for making the same, and display device adopting the same can be better understood with reference to the following drawings. The components in the drawings are not necessarily to scale, the emphasis instead being placed upon clearly illustrating the principles of the present touch panel, method for making the same, and display device adopting the same.

FIG. 1 is a top view of a touch panel, in accordance with a first embodiment.

FIG. 2 is a cross-sectional schematic view of the touch panel of FIG. 1, taken along a line II-II of FIG. 1.

FIG. 3 shows a Scanning Electron Microscope (SEM) image of a drawing carbon nanotube film used in the touch panel of FIG. 1.

FIG. 4 is a structural schematic of a carbon nanotube segment.

FIG. 5 shows a Scanning Electron Microscope (SEM) image of a flocculating carbon nanotube film used in the touch panel in a second embodiment.

FIG. 6 is a Scanning Electron Microscope (SEM) image of a pressing carbon nanotube film including a plurality of carbon nanotubes arranged in the different direction, used in the touch panel in a third embodiment.

FIG. 7 is a Scanning Electron Microscope (SEM) image of a pressing carbon nanotube film including a plurality of carbon nanotubes arranged in the same directions, used in the touch panel in a third embodiment.

FIG. 8 is a top view of a touch panel, in accordance with a forth embodiment.

FIG. 9 is a top view of a touch panel, in accordance with a fifth embodiment.

FIG 10 is a top view of a touch panel, in accordance with a sixth embodiment.

FIG. 11 is a Scanning Electron Microscope (SEM) image of an untwisted carbon nanotube wire-shaped structure.

FIG. 12 is a Scanning Electron Microscope (SEM) image of a twisted carbon nanotube wire-shaped structure.

FIG. 13 is a flow chart of an exemplary method for making the touch panel of FIG. 1.

FIG. 14 shows a photo of carbon nanotube films combined with a flexible base by hot pressing.

FIG. 15 is a schematic view of a hot pressing process.

FIG. 16 is a schematic assembled cross-sectional view of the touch panel of the present embodiment used with a display element of a display device.

FIG. 17 is a schematic assembled view of the touch panel of the present embodiment used in a portable computer.

FIG. 18 is a schematic assembled view of the touch panel of the present embodiment used in a desktop computer.

FIG. 19 is a schematic assembled view of the touch panel of the present embodiment used in a mobile phone.

FIG. 20 is a schematic assembled view of the touch panel of the present embodiment used in a personal digital assistant (PDA).

Corresponding reference characters indicate corresponding parts throughout the several views. The exemplifications set out herein illustrate at least one embodiment of the present touch panel, method for making the same, and display device adopting the same, in at least one form, and such exemplifications are not to be construed as limiting the scope of the invention in any manner.

### DETAILED DESCRIPTION OF PREFERRED EMBODIMENTS

Reference will now be made to the drawings to describe, in detail, embodiments of the present touch panel, method for making the same, and display device adopting the same.

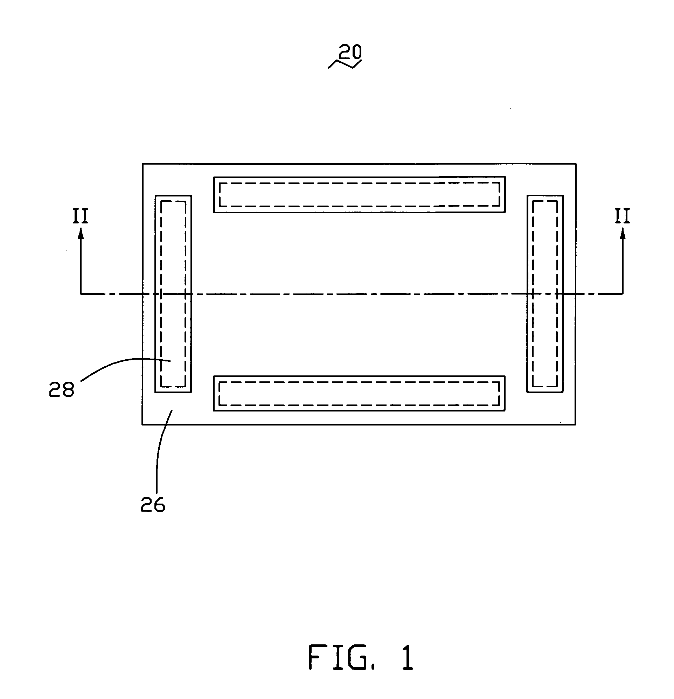

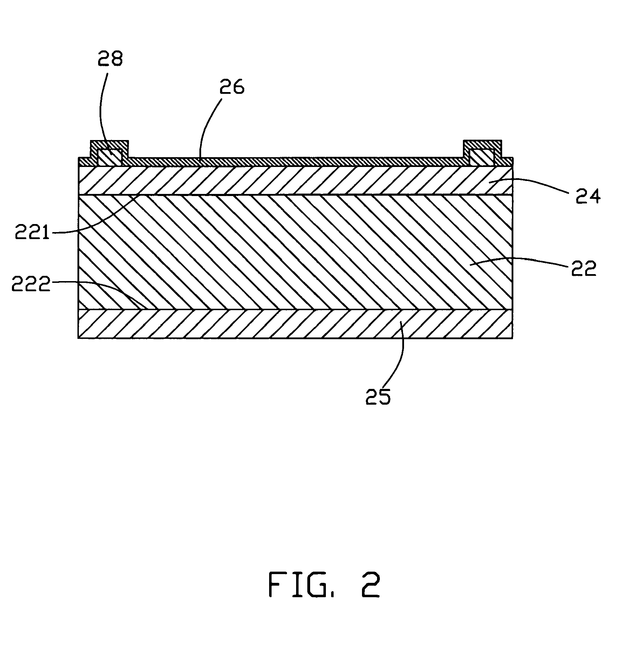

Referring to FIGS. 1 and 2, a touch panel 20 in a first embodiment includes a base 22, a transparent conductive layer 24, a transparent protective film 26, and at least two electrodes 28. The base 22 has a first surface 221 and a second surface 222 at opposite sides thereof respectively. The transparent conductive layer 24 is disposed on the first surface 221. The electrodes 28 are electrically connected with the transparent conductive layer 24 for forming an equipotential surface on the transparent conductive layer 24. The transparent protective film 26 covers the electrodes 28 and the exposed surface of the transparent conductive layer 24 that faces away from the base 22.

The electrodes 28 can be separately disposed on sides of and adjacent to the transparent conductive layer 24, on the transparent conductive layer 24, overlap the transparent conductive layer 24, or be covered by the transparent conductive layer 24. What is need is the electrodes 28 electrically being connected with the transparent conductive layer 24 to create an equipotential surface on the transparent conductive layer 24.

The base 22 has a planar structure or a curved structure. The material of the base 22 can be selected from the group consisting of glass, quartz, diamond, and plastics. Understandably, the base 22 can be made from a transparent and insulated material, e.g., either flexible or hard/stiff, depending on whether a flexible device is desired or not. The base 22 is used to support the transparent conductive layer 24.

It is to be noted that the shape of the base 22 and the transparent conductive layer 24 is chosen according to the requirements of the touch field (i.e., working area) of the touch panel 22. A shape of the working area of the touch panel 20 can be arbitrarily set. A shape of the electrodes 28 and the transparent conductive layer 24 depend on the shape of the working area (e.g. a rectangular area, or a triangular area) of the touch panel 20. Generally, the shape of the touch field may be triangular or rectangular.

When the base 22 is flexible, a thickness of the base 22 ranges from about 0.01 millimeter to 1 centimeter. The base 22 is a transparent and flexible film or plate made of polymer, resin, or any other suitable flexible material. The material of the flexible base 22 can be selected from a group consisting of polycarbonate (PC), polymethyl methacrylate (PMMA), polyethylene terephthalate (PET), polyether sulfones (PES), polyvinyl chloride (PVC), benzocyclobutenes (BCB), polyesters, acrylic resins or any other suitable material. In the present embodiment, the flexible base 22 is made of PET, and the thickness of the base 22 is about 2 millimeters.

The transparent conductive layer 24 includes a carbon nanotube structure. The carbon nanotube layer includes a plurality of carbon nanotubes, ordered or otherwise, and has substantially a uniform thickness. The carbon nanotube structure can include one or a plurality of transparent carbon nanotube layers. It is to be understood that the size of the touch panel 20 is not confined by the size of the carbon nanotube layers. When the size of the carbon nanotube layers is smaller than the desired size of the touch panel 20, a plurality of carbon nanotube layers can be disposed side by side and cover the entire surface of the base 22 to have multiple coplanar layers. Thus, the size of the touch panel 20 can be arbitrarily set, as desired. It is to be understood that one carbon nanotube layer can include a plurality of carbon nanotube films overlapped with each other. A thickness of the carbon nanotube layer is set as desired, as long as the carbon nanotube layer has an acceptable transparency. An alignment direction of carbon nanotubes in each carbon nanotube film is set as desired.

The carbon nanotube film in the carbon nanotube layer in the carbon nanotube structure has a uniform thickness and can be an ordered film or a disordered film. The ordered carbon nanotube film includes ordered carbon nanotubes. The disordered carbon nanotube film includes disordered carbon nanotubes. In this specification, the "disordered" means the align direction of the carbon nanotubes are random, thus, in the disordered carbon nanotube film, the numbers of the carbon nanotubes aligned in every directions in the film are equal. In this specification, the "ordered" means the align direction of at least the majority of the carbon nanotubes has a predetermined regulation (e.g., the carbon nanotubes are aligned substantially along one direction or several directions).

In the ordered film, the carbon nanotubes are oriented along a same direction or several directions. In the disordered film, the carbon nanotubes are disordered or isotropic. The disordered carbon nanotubes are curved, long, and randomly entangled with each other. The isotropic carbon nanotubes are substantially parallel to a surface of the carbon nanotube film.

When the carbon nanotube layer includes some ordered carbon nanotube films stacked with each other, the ordered carbon nanotube films can be aligned along a same direction or aligned along different directions. Thus, an angle α between the aligned directions of the carbon nanotubes in each pair of adjacent carbon nanotube films is in the range 0 < α ≦ 90°.

The carbon nanotubes in the carbon nanotube film include single-walled carbon nanotubes, double-walled carbon nanotubes, or multi-walled carbon nanotubes. Diameters of the single-walled carbon nanotubes, the double-walled carbon nanotubes, and the multi-walled carbon nanotubes can, respectively, be in the approximate range from 0.5 to 50 nanometers, 1 to 50 nanometers, and 1.5 to 50 nanometers.

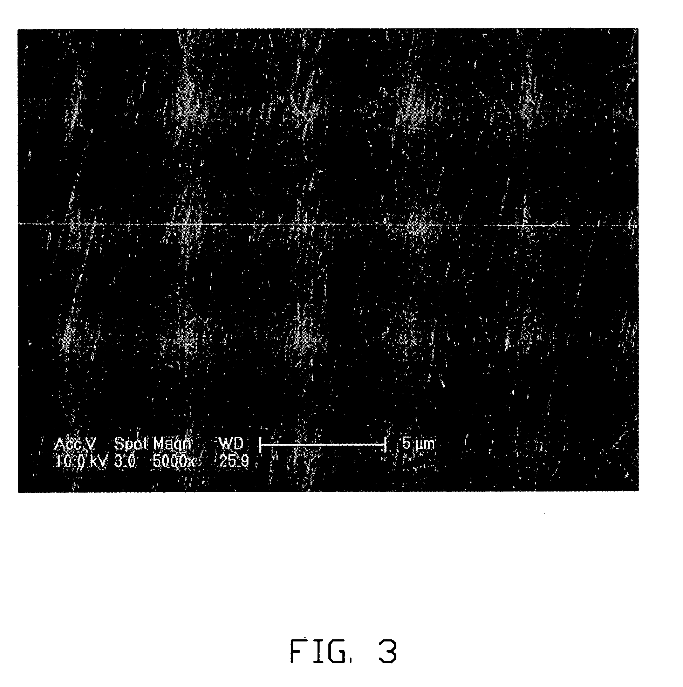

Referring to FIG. 3, in the first embodiment, the carbon nanotube structure includes at least one drawing carbon nanotube film. The "drawing" means the carbon nanotube film is drawn from a supper-aligned carbon nanotube array. The drawing carbon nanotube film can be a free-standing carbon nanotube film. Typically, the carbon nanotubes in each drawing carbon nanotube film are aligned substantially parallel to a same direction (i.e., the drawing carbon nanotube film is an ordered film). As shown in FIG. 3, the majority of carbon nanotubes are arraigned along a primary direction; however, the orientation of some of the nanotubes may vary. More specifically, each drawing carbon nanotube film includes a plurality of successive and oriented carbon nanotubes joined end to end by van der Waals attractive force.

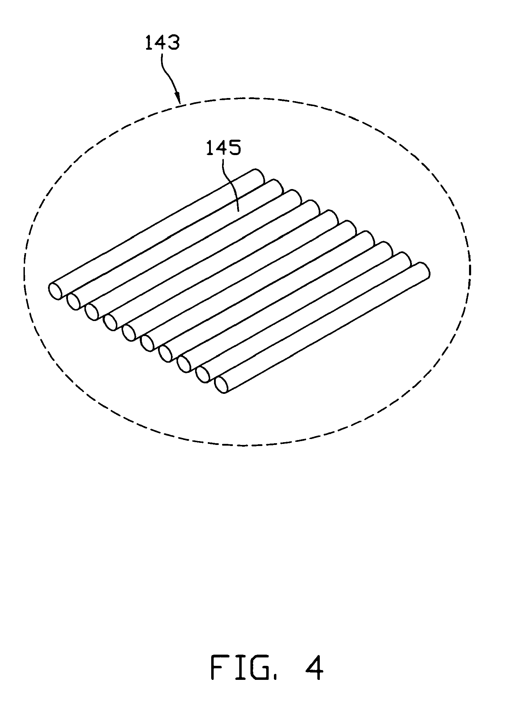

Referring to FIGS. 3 and 4, each carbon nanotube film comprises a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. The carbon nanotube segments 143 can vary in width, thickness, uniformity and shape. The carbon nanotubes 145 in the carbon nanotube film 143 are also oriented along a preferred orientation. A thickness of the drawing carbon nanotube film ranges from 0.5 nanometers to 100 microns. A length and width of the drawing carbon nanotube film are depends on the size of the carbon nanotube array, and the amount of the carbon nanotubes in the carbon nanotube array which the drawing carbon nanotube film is drawn from. Typically, the length of the drawing carbon nanotube film can ranges from 1 micron to 100 meters (or above), the width of the drawing carbon nanotube film can ranges from 0.5 nanometers to 100 centimeters. The drawing carbon nanotube film is flexible and has a relatively high toughness due to the van der Walls attractive force between the carbon nanotubes.

The electrodes 28 can be formed directly on the transparent conductive layer 24, or adhered on the transparent conductive layer 24 by an adhesive (e.g., silver past). The electrodes 28 can be formed by metallic layers (e.g., silver, copper, or other metals with relatively low resistivity), conductive resin layers, carbon nanotube films or any other suitable materials. A thickness of the electrodes 28 can be in the approximate range from 10 nanometers to 400 microns. In the present embodiment, the material of the electrodes 28 is silver paste. It is noted that the electrodes 28 of the flexible touch panel 20 should be tough and flexible.

When the electrodes 28 includes carbon nanotubes, the plurality of carbon nanotubes form a carbon nanotube layer. The carbon nanotube layer can includes one carbon nanotube film or a plurality of carbon nanotube films stack with each other. The carbon nanotube film is disordered or ordered. More specifically, the carbon nanotube film can be selected from the group consisting of drawing carbon nanotube film, flocculating carbon nanotube film, pressing carbon nanotube film, carbon nanotube wire-shaped structure or combinations thereof.

In the present embodiment, the electrodes 28 are all includes several layers of drawing carbon nanotube films stacked with each other. In each electrode 28, the carbon nanotubes are aligned along the same direction.

It is to be understood that when the carbon nanotubes in the transparent conductive layer 24 are aligned along the same direction, the electrodes 28 can be disposed at two opposite sides of the transparent conductive layer 24 along the carbon nanotube aligned direction. That is, the aligned direction of the carbon nanotubes is from one electrode to the opposite electrode.

The carbon nanotube layer is toughness and mechanically and chemically durable. Thus, the touch panel 20 using the carbon nanotube layer as the transparent conductive layer 24 and/or the electrodes 28 is durable. Specially, when the base 22 is made of a flexible material, the touch panel 20 is flexible, and the carbon nanotube layer will not be damaged by the constant deformation.

Further, in order to prolong operational life span and restrict coupling capacitance of the touch panel 20, the transparent protective film 26 is disposed on the electrodes 28 and the transparent conductive layer 24. The transparent protective film 26 can be a plastic film and receives a surface hardening treatment to protect the electrodes 28 and the transparent conductive layer 24 from being scratched when in use. The transparent protective film 26 can be adhered to the transparent conductive layer 24 or combined with the transparent conductive layer 24 by a hot-pressing method. The transparent protective film 26 can be rigid or flexible. The material of the rigid transparent protective film 26 can be selected from the group consisting of silicon nitride, silicon dioxide, and combinations thereof. The flexible transparent protective film 26 can be a plastic film or a resin film. The material of the resin film can be selected from a group consisting of benzocyclobutenes (BCB), polyesters, acrylic resins, polyethylene terephthalate (PET), and any combination thereof.

In the present embodiment, the material of the transparent protective film 26 is PET. The hardness and thickness of the transparent protective film 26 are selected according to practical needs. The transparent protective film 26 can be adhered to the transparent conductive layer 24 or hot pressed to combine with the transparent conductive layer 24.

It is to be understood that the touch panel 20 can further include a second transparent conductive layer (not shown) disposed on the second surface 222 of the base 22, and be opposite to the transparent conductive layer 24. During working, the touch panel 20 detecting the variation of the capacitances between the two transparent conductive layers, to get the position of the touch point. In this situation, the touch panel further includes a second transparent protective film (not shown) on the second transparent conductive layer.

The touch panel 20 can further include a shielding layer 25 disposed on the second surface 222 of the base 22. The material of the shielding layer 25 can be ITO film, ATO film, conductive resin film, carbon nanotube film, or another kind of flexible and conductive transparent film. The shielding layer 25 can includes one carbon nanotube film or a plurality of carbon nanotube films stack with each other. The carbon nanotube film is disordered or ordered. More specifically, the carbon nanotube film can be selected from the group consisting of drawing carbon nanotube film, flocculating carbon nanotube film, pressing carbon nanotube film, carbon nanotube wire-shaped structure or combinations thereof. The carbon nanotube film includes a plurality of carbon nanotubes, and the orientation of the carbon nanotubes therein can be arbitrarily determined. In the present embodiment, the carbon nanotubes in the carbon nanotube film of the shielding layer are arranged along a same direction. The carbon nanotube film is connected to ground and acts as shielding, thus enabling the touch panel 20 to operate without interference (e.g., electromagnetic interference).

The structure of the touch panel in a second embodiment is similar to the structure of the touch panel 20 in the first embodiment. The difference is that the transparent conductive layer includes at least one carbon nanotube structure, and the carbon nanotube structure includes a flocculating carbon nanotube film. The "flocculating" carbon nanotube film means the carbon nanotube film is formed by a flocculating method.

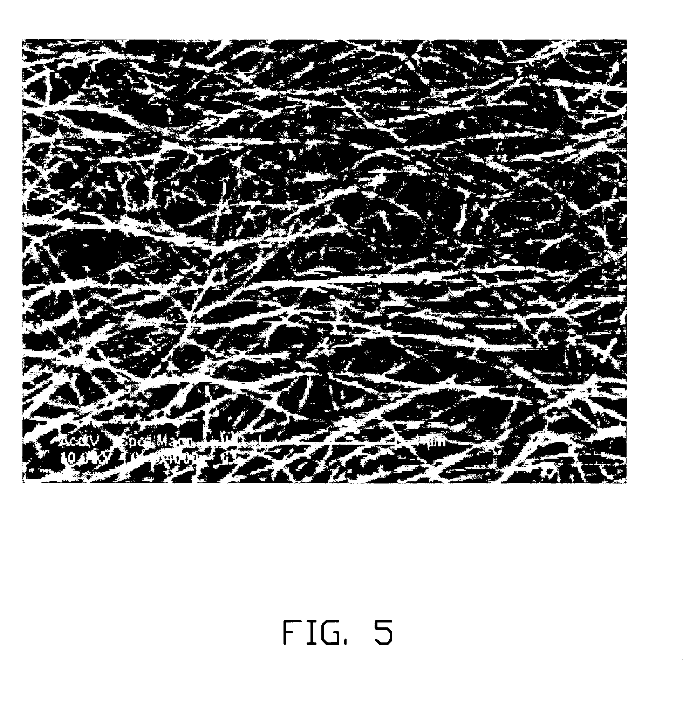

Referring to FIG. 5, the flocculating carbon nanotube film can be a free-standing carbon nanotube film and includes a plurality of long, curved, disordered carbon nanotubes entangled with each other. The adjacent carbon nanotubes are combined and entangled by van der Waals attractive force therebetween, thereby forming an entangled, microporous structure. Thus, the flocculating carbon nanotube film is flexible. Further, the carbon nanotubes in the flocculating carbon nanotube film are substantially uniform. It is understood that the flocculating carbon nanotube film is typically very microporous. Sizes of the micropores are less than 50 micrometers. A length and a width of the flocculating carbon nanotube film can be arbitrarily set, as desired. Due to the flocculating carbon nanotube film having good tensile strength, it can be formed into almost any desired shape. As such, the flocculating carbon nanotube film can have a planar or curved structure. The carbon nanotubes in the flocculating carbon nanotube film can be selected from a group consisting of single-walled carbon nanotubes, double-walled carbon nanotubes, and multi-walled carbon nanotubes. A diameter of each single-walled carbon nanotube is in an approximate range from 0.5 nanometers to 50 nanometers. A diameter of each double-walled carbon nanotube is in an approximate range from 1 nanometer to 50 nanometers. A diameter of each multi-walled carbon nanotube is in an approximate range from 1.5 nanometers to 50 nanometers.

In the present embodiment, the carbon nanotube structure includes one layer of flocculating carbon nanotube film. A length of the carbon nanotubes in the flocculating carbon nanotube film is larger than 10 microns. A thickness of the flocculating carbon nanotube film is ranges from 0.5 nanometers to 1 millimeter.

Due to the flocculating carbon nanotube film including a plurality of substantially uniform carbon nanotubes and the micropores, the flocculating carbon nanotube film has excellent resistance distribution and light transparence. Thus the touch panel in the second embodiment has good accuracy and transparency.

The structure of the touch panel in a third embodiment is similar to the structure of the touch panel 20 in the first embodiment. The difference is that the transparent conductive layer includes a carbon nanotube structure, and the carbon nanotube structure includes at least one pressing carbon nanotube film. The "pressing" carbon nanotube film means the carbon nanotube film is formed by a pressing a carbon nanotube array.

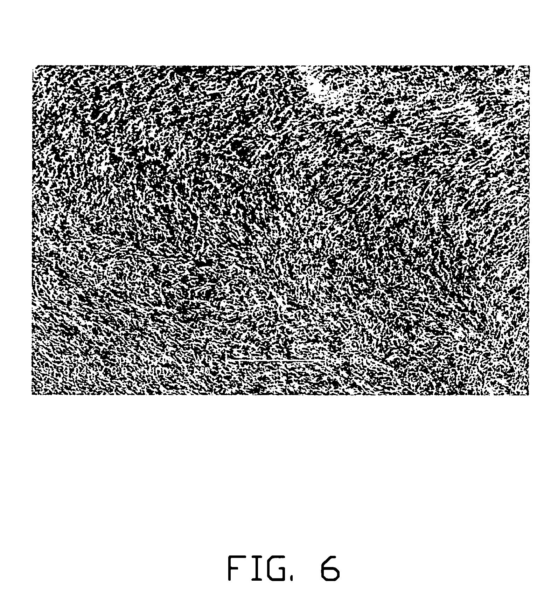

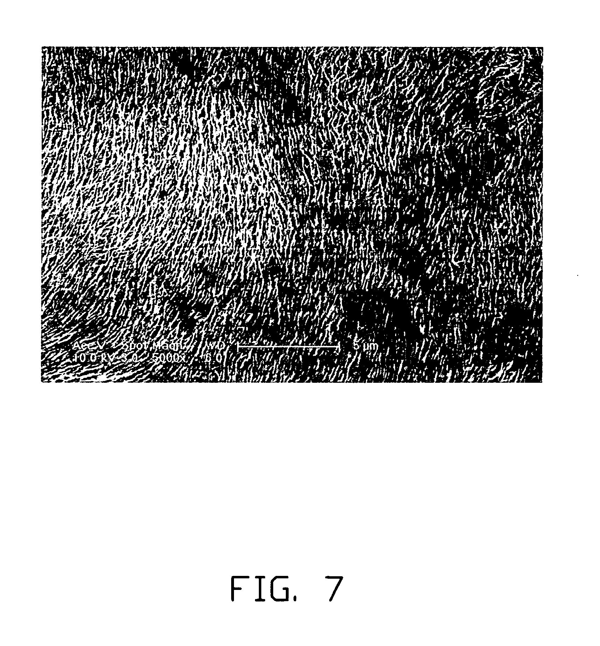

Referring to FIG. 6 and FIG. 7, the pressing carbon nanotube film can be a free-standing carbon nanotube film. Further, the carbon nanotubes are substantially parallel to a surface of pressing carbon nanotube film. The carbon nanotubes are selected from the group consisting of the carbon nanotubes isotropically arranged, arranged along a certain direction, or arranged along different directions. An angle between a primary alignment direction of the carbon nanotubes and a surface of the pressing carbon nanotube film is 0 ° to approximately 15 °. The pressing carbon nanotube film can be formed by pressing a carbon nanotube array. The angle is closely related to pressure applied to the carbon nanotube array. The greater the pressure, the smaller the angle. The carbon nanotubes in the pressing carbon nanotube film can parallel to the surface of the pressing carbon nanotube film when the angle is 0 °. The adjacent carbon nanotubes are combined and attracted by van der Waals attractive force, thereby forming a free-standing structure. As such, the pressing carbon nanotube film is flexible and has good tensile strength, and can be formed into most any desired shape of the base. The pressing carbon nanotube film includes a plurality of micropores. A diameter of the micropores is less than about 1 micron. As such, a specific area of the pressing carbon nanotube film is extremely large. The thickness of the pressing carbon nanotube film is ranged from 0.5 nanometers to 1 millimeter.

Due to the pressing carbon nanotube film including a plurality of substantially uniform and parallel carbon nanotubes and the micropores, the pressing carbon nanotube film has excellent resistance distribution and light transparence. Thus the touch panel in the third embodiment has good accuracy and transparency.

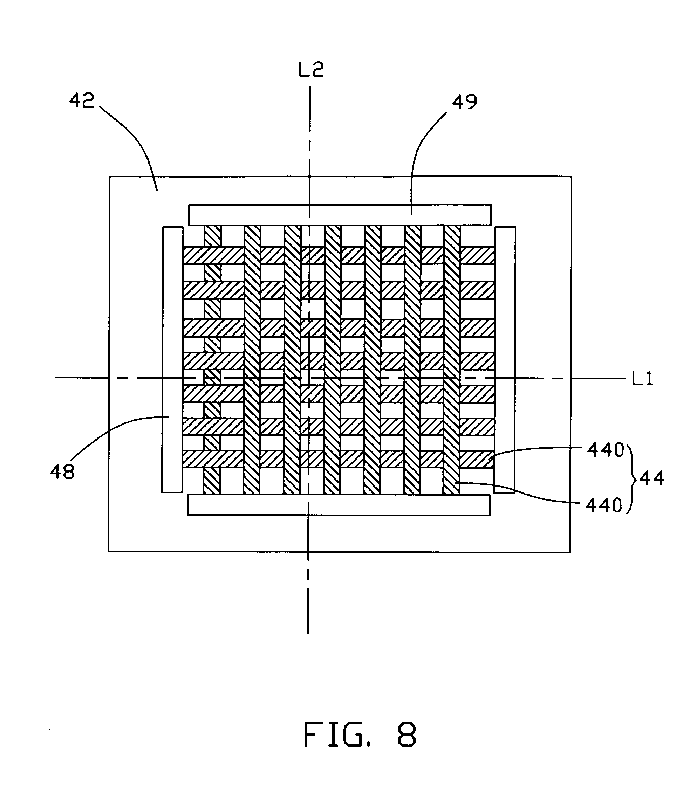

Referring to FIG. 8, the structure of the touch panel 40 in a fourth embodiment is similar to the structure of the touch panel 20 in the first embodiment. The touch panel 40 includes a base 42, a transparent conductive layer 44, two first electrodes 48, and two second electrodes 49. The transparent conductive layer 44 is disposed on a surface of the base 42.

The difference between the touch panel 40 in the fourth embodiment and the touch panel 20 in the first embodiment is that the transparent conductive layer includes a carbon nanotube structure, and the carbon nanotube structure includes a plurality of carbon nanotube strip-shaped film structures 440. The structure of the carbon nanotube "strip-shaped" film structure 440 is the same as the drawing carbon nanotube film. However, the "strip-shaped" film structure 440 has a relatively small width and relatively large length.

In the carbon nanotube structure, the carbon nanotube strip-shaped film structures 440 are aligned along a first direction L1 and a second direction L2. The first direction L1 is different from the second direction L2 (i.e., the first direction L1 intersects the second direction L2). Thus, the carbon nanotube strip-shaped film structures 440 aligned along the first direction L1 are crossed with the carbon nanotube strip-shaped film structures aligned along the second direction L2. In the present embodiment, the first direction L1 is perpendicular to the second direction L2.

The carbon nanotube strip-shaped film structures 440 in the same direction are parallel and coplanar with each other. The carbon nanotube strip-shaped film structures 440 can be contactingly disposed side by side or spaced therebetween. In the present embodiment, the carbon nanotube strip-shaped film structures 440 in the same direction are spaced therebetween. The distance between each two adjacent carbon nanotube strip-shaped film structures 440 is in the approximate range from 5 nanometers to 1 millimeter.

Two opposite ends of the carbon nanotube strip-shaped film structures 440 arranged along the first direction L1 are respectively and electrically connected to the first electrodes 48. Two opposite ends of the carbon nanotube strip-shaped film structures 440 arranged along the second direction L2 are respectively and electrically connected to the second electrodes 49, thereby forming an equipotential surface on the transparent conductive layer 44. A transparent protective layer covers the first electrodes 48, the second electrodes 49, and the exposed surface of the transparent conductive layer 44 that faces away from the base 42.

The transparent conductive layer 44 includes a plurality of intersected carbon nanotube strip-shaped film structures 440. Such a carbon nanotube strip-shaped film structure 440 can be a drawing carbon nanotube film or a plurality of stacked drawing carbon nanotube films, and adjacent carbon nanotube films are combined by the van der Waals attractive force therebetween. The carbon nanotubes in the adjacent carbon nanotube films are arranged along a same direction or different directions.

In the present embodiment, each carbon nanotube strip-shaped film structure 440 includes one drawing carbon nanotube film. The carbon nanotubes in the carbon nanotube strip-shaped film structures 440 aligned along the first direction L1 are aligned along the first direction L1. The carbon nanotubes in the carbon nanotube strip-shaped film structures 440 aligned along the second direction L2 are aligned along the second direction L2.

It is to be understood that a filling layer is located in gaps between the carbon nanotube strip-shaped film structures 440. The filling layer is formed of material with a refractive index and a transmissivity similar to those of the carbon nanotube strip-shaped film structures 440.

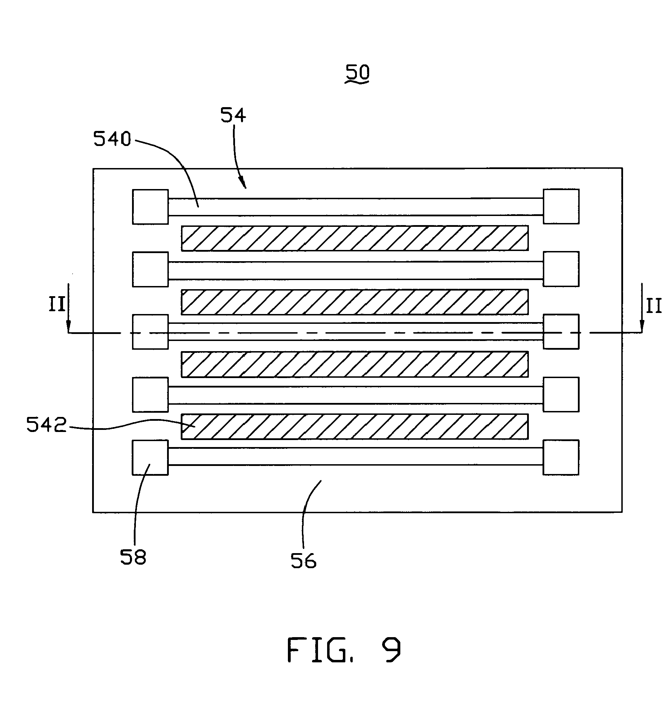

Referring to FIG. 9, the structure of the touch panel 50 in a fifth embodiment is similar to the structure of the touch panel 40 in the fourth embodiment. The touch panel 50 includes a base 56, a transparent conductive layer 54. The transparent conductive layer 54 is disposed on a surface of the base 56.

The difference between the touch panel 50 in the fifth embodiment and the touch panel 40 in the fourth embodiment is that the touch panel 50 includes a plurality of electrodes 58. The plurality of electrodes 58 spaced therebetween and electrically connected to the transparent conductive layer 54, thereby forming an equipotential surface on the transparent conductive layer 54. More specifically, referring to FIG. 9, the plurality of electrodes can aligned along two lines at two sides of the transparent conductive layer 54.

The transparent conductive layer 54 includes a carbon nanotube structure. The carbon nanotube structure includes a plurality of parallel and spaced carbon nanotube strip-shaped film structures 540. The electrodes 58 are electrically connected to the carbon nanotube strip-shaped film structures 540 at the two opposite ends thereof. Each electrode 58 is electrically connected to at least one carbon nanotube strip-shaped film structures 540. In the present embodiment, each carbon nanotube strip-shaped film structures 540 corresponds to two electrodes 58 at two sides thereof.

It is to be understood that a filling layer 542 is located in gaps between the carbon nanotube strip-shaped film structures 540. The filling layer 542 is formed of material with a refractive index and a transmissivity similar to those of the carbon nanotube strip-shaped film structures 540.

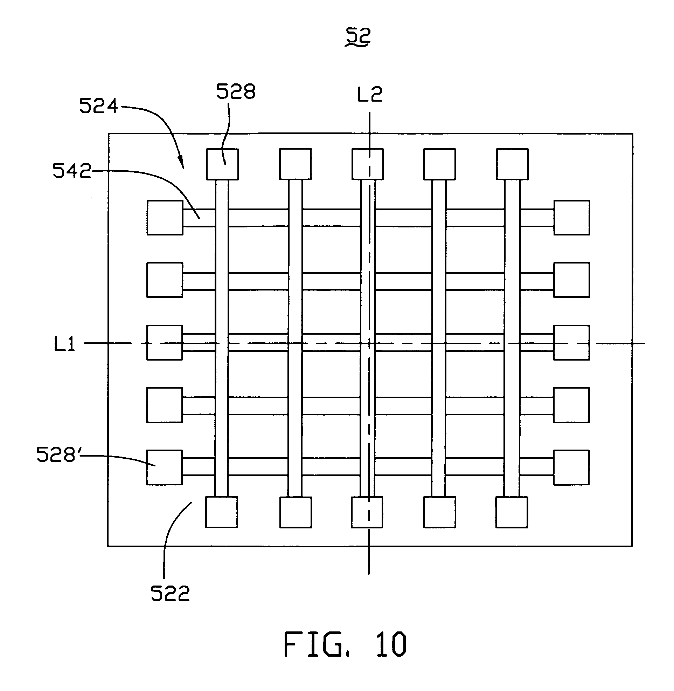

Referring to FIG. 10, the structure of the touch panel 52 in a sixth embodiment is similar to the structure of the touch panel 50 in the fifth embodiment. The touch panel 52 includes a base 522, a transparent conductive layer 524. The transparent conductive layer 524 is disposed on a surface of the base 522.

The difference between the touch panel 52 in the sixth embodiment and the touch panel 50 in the fifth embodiment is that the touch panel 52 includes a plurality of electrodes 528. The plurality of electrodes 528 spaced therebetween and electrically connected to the transparent conductive layer 524, thereby forming an equipotential surface on the transparent conductive layer 524. More specifically, referring to FIG. 10, the plurality of electrodes 528 can aligned along four lines at four sides of the transparent conductive layer 524.

A structure of the touch panel in a seventh embodiment is similar to the structure of the touch panel 40 in the fourth embodiment. The difference between the touch panel in the seventh embodiment and the touch panel 40 in the fourth embodiment is that the transparent conductive layer of the touch panel in the seventh embodiment includes a plurality of carbon nanotube wire-shaped structures to form the carbon nanotube structure. The carbon nanotube wire-shaped structures aligned along the first direction L1 and the second direction L2. The first direction L1 intersects with the second direction. The carbon nanotube wire-shaped structures along the same direction can contacted and parallel with each other, or spaced with each other. In the present embodiment, the distance between the carbon nanotube wire-shaped structures along the same direction is in the approximate range from 5 nanometers to 1 millimeter.

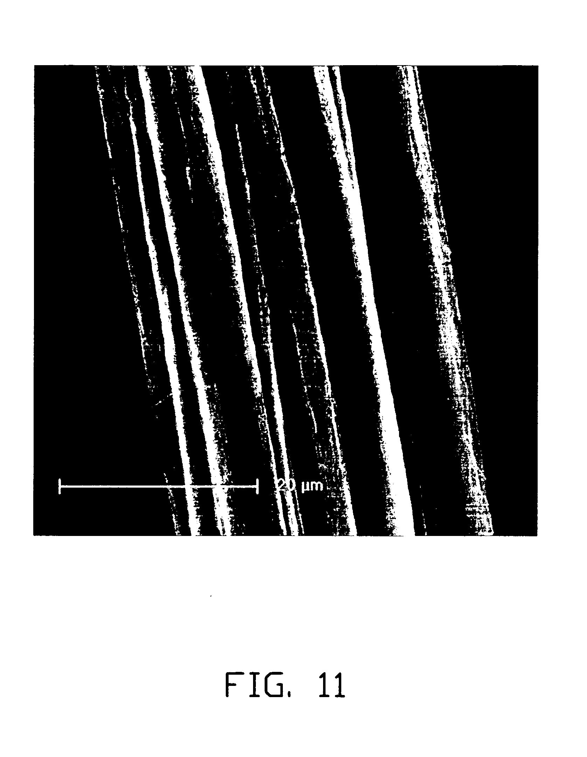

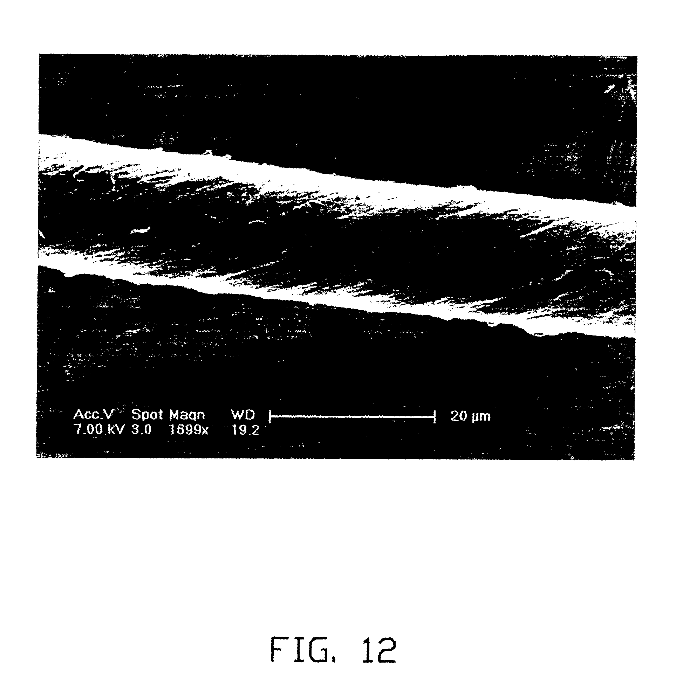

Referring to FIG. 11 and FIG. 12, the untwisted carbon nanotube wire-shaped structure includes a plurality of carbon nanotubes oriented along a same direction (i.e., a direction along the length of the wire), and the twisted carbon nanotube wire-shaped structure includes a plurality of carbon nanotubes oriented around an axial direction of the carbon nanotube wire-shaped structure. More specifically, the carbon nanotube wire-shaped structure includes a plurality of successive carbon nanotubes joined end to end by van der Waals attractive force therebetween. Length of the carbon nanotube wire-shaped structure can be arbitrarily set as desired. A diameter of the carbon nanotube wire is in an approximate range from 0.5 nanometers to 100 micrometers (µm).

The carbon nanotube wire-shaped structure is toughness and mechanically and chemically durable. Thus, the touch panel using the carbon nanotube wire-shaped structure as the transparent conductive layer is durable. Specially, when the base is made of a flexible material, the touch panel is flexible, and the carbon nanotube wire-shaped structure will not be damaged by the constant deformation.

Due to the carbon nanotube structure including a plurality of crossed carbon nanotube wire-shaped structure, a plurality of micropores are formed. Thus, the carbon nanotube structure has uniform resistance distribution and light transparence. Thus the touch panel in the seventh embodiment has good accuracy and transparency.

A structure of the touch panel in a eighth embodiment is similar to the structures of the touch panels 50, 52 in the fifth and sixth embodiments. The difference between is that the transparent conductive layer of the touch panel in the eighth embodiment includes a plurality of carbon nanotube wire-shaped structures to form the carbon nanotube structure. The structure of the carbon nanotube wire-shaped structure is the same as that in the seventh embodiment.

The carbon nanotubes exhibit superior toughness, high mechanical strength, and uniform conductivity in the carbon nanotube wire-shaped structures. Thus the touch panel utilizing the carbon nanotube wire-shaped structures as the transparent conductive layer are durable and highly conductive. Furthermore, since the carbon nanotubes have excellent conductive properties, the transparent conductive layer formed with the carbon nanotube wire-shaped structures provides a uniform resistive distribution, thereby improving the sensitivity and accuracy of the touch panel.

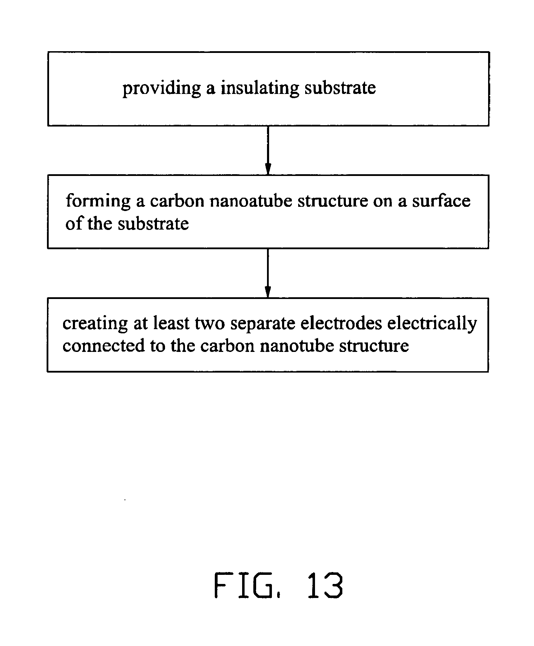

Referring to FIG. 13, an exemplary method for making the above-described touch panel 20 in the first embodiment includes the steps of: (a) providing a transparent insulating base 22; (b) forming a carbon nanoatube structure on a surface of the base 22; (c) creating at least two separate electrodes electrically connected to the carbon nanotube structure.

In step (b), the carbon nanotube structure can include the flocculating carbon nanotube film, the pressing carbon nanotube film, the drawing carbon naotube film, the carbon nanotube strip-shaped film structure, or the carbon nanotube wire-shaped structure. The method for forming the carbon nanotube strip-shaped film structure is the same as the method for forming the drawing carbon nanotube film.

When the carbon nanotube structure is a flocculating carbon nanotube film, step (b) includes the following steps of: (b1) providing carbon nanotubes; (b2) flocculating the carbon nanotubes to acquire a carbon nanotube floccule structure, and forming a transparent conductive layer 24 on the base 22 with the carbon nanotube floccule structure.

Step (b1) can be executed by the following steps of: (b11) providing a substantially flat and smooth base; (b12) forming a catalyst layer on the base; (b13) annealing the base with the catalyst layer in air at a temperature in an approximate range from 700°C to 900°C for about 30 to 90 minutes; (b14) heating the base with the catalyst layer to a temperature in the approximate range from 400°C to 740°C in a furnace with a protective gas therein; (b15) supplying a carbon source gas to the furnace for about 5 to 30 minutes and growing the array of carbon nanotubes on the base; and (b16) separating the array of carbon nanotubes from the base to get the plurality of carbon nanotubes.

In step (b11), the base can be a P-type silicon wafer, an N-type silicon wafer, or a silicon wafer with a film of silicon dioxide thereon. In this embodiment, a 4-inch P-type silicon wafer is used as the base. In step (b12), the catalyst can be made of iron (Fe), cobalt (Co), nickel (Ni), or any alloy thereof. In step (b14), the protective gas can be made up of at least one of nitrogen (N₂), ammonia (NH₃), and a noble gas. In step (b15), the carbon source gas can be a hydrocarbon gas, such as ethylene (C₂H₄), methane (CH₄), acetylene (C₂H₂), ethane (C₂H₆), or any combination thereof.

The array of carbon nanotubes can be a super-aligned array of carbon nanotubes, and have a height of about 50 microns to 5 millimeters. The array of carbon nanotubes includes a plurality of carbon nanotubes parallel to each other and approximately perpendicular to the base.

The super-aligned array of carbon nanotubes formed under the above conditions is essentially free of impurities such as carbonaceous or residual catalyst particles. The carbon nanotubes in the super-aligned array are closely packed together by the van der Waals attractive force.

In step (b2), the flocculating process includes the substeps of: (b21) adding carbon nanotubes to a solvent to get a carbon nanotube floccule structure; (b22) removing the solvent to obtain a carbon nanotube structure; (b23) applying the carbon nanotube structure to the base 22.

In step (b21) of the present embodiment, the solvent is selected from the group consisting of water and volatile organic solvent. After adding the carbon nanotubes to the solvent, a process of flocculating is executed to get the carbon nanotube floccule structure. The process of flocculating is selected from the group of processes consisting of ultrasonic dispersion and high-strength agitating/vibrating. In this embodiment, ultrasonic dispersion is used to flocculate the solvent containing the carbon nanotubes for about 10~30 minutes. Due to the carbon nanotubes in the solvent having a large specific surface area and the carbon nanotubes having a large van der Waals attractive force, the flocculated carbon nanotubes form an entangled structure (i.e., carbon nanotube floccule structure).

In step (b22), the removing the solvent can be done by the process of pumping filtration which includes the substeps of: filtering the solvent containing the carbon nanotube floccule structure through a microporous membrane and into an air-pumping funnel; and air-pumping and drying the carbon nanotube floccule structure captured on the microporous membrane to obtain the carbon nanotube structure.

The microporous membrane has a smooth surface. And the diameters of micropores in the membrane are about 0.22 microns. The pumping filtration can exert air pressure on the carbon nanotube floccule structure, thus, forming a uniform carbon nanotube structure. Moreover, due to the microporous membrane having a smooth surface, the carbon nanotube structure can be easily separated from the membrane.

In step (b3), the carbon nanotube structure is cut into a predetermined shape, and is attached to the surface of the base 22.

Step (b2) can be also accomplished by the substeps of: (b21') adding the carbon nanotubes to a solvent to obtain a carbon nanotube floccule structure; (b22') separating the carbon nanotube floccule structure from the solvent, and (b23') shaping the separated carbon nanotube floccule structure on the surface of the base 22, to form a carbon nanotube structure on the base 22.

Step (b22') includes the substeps of: pouring the solvent containing the carbon nanotube floccule structure into a funnel having a filter; and drying the carbon nanotube floccule structure on the filter to obtain the carbon nanotube floccule structure free of solvent.

In step (b22'), a time of drying can be selected according to practical needs. The carbon nanotube floccule structure on the filter is bundled together, so as to form an irregular carbon nanotube flocculate structure.

In step (b23'), the process of shaping the separated carbon nanotube floccule structure into the carbon nanotube structure includes the substeps of: putting the carbon nanotube floccule structure on the base 22, and working the carbon nanotube floccule structure into a predetermined shape; pressing the worked carbon nanotube floccule structure with pressure to yield a desirable shape; and drying the spread carbon nanotube floccule structure to remove the residual solvent to form a carbon nanotube layer on the base 22.

In step (b23'), the separated carbon nanotube floccule structure also can be put on another base. Then the raw carbon nanotube floccule structure is pressed with a certain pressure to yield a desirable shape and is cut into sizes of the base 22, and then is adhered on the surface of the base 22 to form a transparent conductive layer thereon.

It is to be understood that the size of the spread carbon nanotube floccule structure is used to control a thickness and a surface density of the carbon nanotube structure and can be adjusted as needed. As such, the larger the area of a given amount of the carbon nanotube floccule structure is spread over, the less the thickness and the density of the carbon nanotube structure.

When the carbon nanotube structure is a pressing carbon nanotube film, step (b) includes the following steps of: (b1') providing at least one array of carbon nanotubes; (b2') pressing the array of carbon nanotubes with a pressing device to form a carbon nanotube structure on the surface of the base 22, thereby forming a transparent conductive layer 24 on the base 22.

In step (b1'), the method for forming the at least one array of carbon nanotubes is similar to that for forming an array of carbon nanotubes in step (b1).

In step (b2'), since the carbon nanotube array is adherent in nature, the base 22 can be firmly adhered to the array of carbon nanotubes. In the present embodiment, the transparent conductive layer 24 can be formed by either of two methods. The first method includes the steps of: (b2'1) providing a pressing device, and pressing the array of carbon nanotubes to form a carbon nanotube film; (b2'2) cutting the carbon nanotube film into sizes of the base 22; and (b2'3) adhering the cut carbon nanotube film on the surface of the base to form the transparent conductive layer 24. The second method includes the steps of: (b2' 1') placing the first surface 221 of base 22 on the array of carbon nanotubes; (b2'2') providing a pressing device, and pressing opposite second surface 222 of the base 22 so that the base 22 are pressed onto the array of carbon nanotubes to form a carbon nanotube film on the first surface 221 of the base 22; and (b2'3') cutting away excess carbon nanotube film to form the transparent conductive layer 24 on the base 22.

In step (b2'), a certain pressure can be applied to the array of carbon nanotubes by the pressing device. In the process of pressing, the carbon nanotubes in the array of carbon nanotubes form each of the carbon nanotube films under pressure. The carbon nanotubes in each carbon nanotube film are nearly all parallel to a surface of the carbon nanotube film. In step (b2'1), in the process of pressing, the carbon nanotubes slant, thereby forming a carbon nanotube film having a free-standing structure on the base on which the carbon nanotube array is initially formed. The carbon nanotubes in the free-standing structure are nearly all parallel to a major surface of the carbon nanotube film, and are arranged isotropically, or arranged along a same direction or arranged along different directions. In step (b2'2'), the carbon nanotube film, under a certain pressure, separates from the growing base on which the carbon nanotube array is initially formed, and is adhered on the first base and the second base respectively because of the adhesive properties of the carbon nanotubes.

In the present embodiment, the pressing device can be a pressure head. The pressure head has a smooth surface. It is to be understood that the shape of the pressure head and the pressing direction can, opportunely, determine the direction of the carbon nanotubes arranged in each carbon nanotube film. Specifically, when a planar pressure head is used to press the array of carbon nanotubes along a direction perpendicular to the applicable base, a carbon nanotube film having a plurality of carbon nanotubes isotropically arranged can be obtained. Referring to FIG. 6, when a roller-shaped pressure head is used to travel across and press the array of carbon nanotubes along different directions, a carbon nanotube film having a plurality of carbon nanotubes aligned along corresponding different directions is obtained. Referring to FIG. 7, when a roller-shaped pressure head is used to travel across and press the array of carbon nanotubes along a predetermined single direction, a carbon nanotube film having a plurality of carbon nanotubes aligned along a general direction is obtained.

In the process of pressing, the carbon nanotubes will bend/fall over, thereby forming a carbon nanotube film having a free-standing structure with slanted carbon nanotubes. The carbon nanotubes in the free-standing structure are nearly all parallel to a surface of the carbon nanotube film, and are isotropically arranged, arranged along a same direction, or arranged along different directions.

When the carbon nanotube structure is a drawing carbon naotube film, step (b) includes the following steps of: (b1") providing an array of carbon nanotubes; (b2") pulling out a drawing carbon nanotube film from the array of carbon nanotubes, by using a tool (e.g., adhesive tape, pliers, tweezers, or another tool allowing multiple carbon nanotubes to be gripped and pulled simultaneously); (b3 ") applying at least one drawing carbon nanotube film on the surface of the base 22.

In step (b1"), the method for forming the array of carbon nanotubes is similar to that for forming an array of carbon nanotubes in step (b1). The array of carbon nanotubes is a super-aligned array of carbon nanotubes.

In step (b2"), the drawing carbon nanotube film can be formed by the substeps of: (b2"1) selecting a one or more carbon nanotubes having a predetermined width from the array of carbon nanotubes; and (b2"2) pulling the carbon nanotubes to form nanotube segments at an even/uniform speed to achieve a uniform drawing carbon nanotube film.

In step (b2"1), the carbon nanotube segment includes a plurality of carbon nanotubes parallel to each other. The carbon nanotube segments can be selected by using an adhesive tape as the tool to contact the array of carbon nanotubes. In step (b2"2), the pulling direction is substantially perpendicular to the growing direction of the super-aligned array of carbon nanotubes. It is to be understood that some variation can occur in the orientation of the nanotubes in the film as can be seen in FIG 3.

More specifically, during the pulling process, as the initial carbon nanotube segments are drawn out, other carbon nanotube segments are also drawn out end to end due to van der Waals attractive force between ends of adjacent carbon nanotube segments. This process of drawing ensures a substantially continuous and uniform drawing carbon nanotube film can be formed.

The drawing carbon nanotube film includes a plurality of carbon nanotube segments. The carbon nanotubes in the drawing carbon nanotube film are all substantially parallel to the pulling/drawing direction of the carbon nanotube film, and the drawing carbon nanotube film produced in such manner can be selectively formed having a predetermined width. The drawing carbon nanotube film formed by the pulling/drawing method has superior uniformity of thickness and conductivity over a disordered carbon nanotube film. Further, the pulling/drawing method is simple, fast, and suitable for industrial applications.

The width of the drawing carbon nanotube film depends on a size of the carbon nanotube array. The length of the drawing carbon nanotube film can be arbitrarily set, as desired. In one useful embodiment, when the base is a 4-inch type wafer as in the present embodiment, the width of the drawing carbon nanotube film approximately ranges from 0.5 nanometers to 10 centimeters, and the thickness thereof approximately ranges from 0.5 nanometers to 100 micrometers. The carbon nanotubes 145 in the drawing carbon nanotube film can be selected from a group consisting of single-walled carbon nanotubes, double-walled carbon nanotubes, and multi-layer carbon nanotubes. Diameters of the single-walled carbon nanotubes approximately range from 0.5 to 50 nanometers. Diameters of the double-walled carbon nanotubes approximately range from 1 to 50 nanometers. Diameters of the multi-walled carbon nanotubes approximately range from 1.5 to 50 nanometers.

In step (b3"), it is noted that because the carbon nanotubes in the super-aligned carbon nanotube array have a high purity and a high specific surface area, the carbon nanotube film is adherent in nature. As such, the carbon nanotube film can be adhered directly to the surface of the base 22, and/or another carbon nanotube film. In the alternative, other bonding means can be applied. In the present embodiment, the carbon nanotube structure can only include a single drawing carbon nanotube film. Each drawing carbon nanotube film comprises a plurality of carbon nanotube segments; which are in turn comprised of a plurality of carbon nanotubes arranged along a same direction. The direction is generally the pulling direction. As such, at least two drawing carbon nanotube films are arranged and stacked with the angle α between the orientation of the nanotubes, wherein 0□α□90°. By applying an angle to the alignment direction, the strength of the stacked layers as a hole is improved.

The at least one carbon nanotube film, once adhered to the surface of the base 22 can be treated with an organic solvent. The at least one carbon nanotube film can be treated by dropping the organic solvent from a dropper to soak the entire surface of the carbon nanotube film. The organic solvent is volatilizable and can, suitably, be selected from the group consisting of ethanol, methanol, acetone, dichloroethane, chloroform, and combinations thereof. In the present embodiment, the organic solvent is ethanol. After being soaked by the organic solvent, microscopically, carbon nanotube strings will be formed by adjacent carbon nanotubes in the carbon nanotube film, that are able to do so, bundling together, due to the surface tension of the organic solvent. In one aspect, part of the carbon nanotubes in the untreated at least one carbon nanotube film that are not adhered on the base will adhere on the base 22 after the organic solvent treatment due to the surface tension of the organic solvent. Then the contacting area of the at least one carbon nanotube film with the base will increase, and thus, the at least one carbon nanotube film can firmly adhere to the surface of the base 22. In another aspect, due to the decrease of the specific surface area via the bundling, the mechanical strength and toughness of the at least one carbon nanotube film are increased and the coefficient of friction of the at least one carbon nanotube films is reduced. Macroscopically, the film will be an approximately uniform carbon nanotube film.

When the carbon nanotube structure includes the carbon nanotube wire-shaped structures, step (b) includes the following steps of: (b1 "') providing an array of carbon nanotubes; (b2"') pulling out a carbon nanotube film or a carbon nanotube yarn from the super-aligned array of carbon nanotubes using a tool (for example, adhesive tape, pliers, tweezers, or another tool allowing multiple carbon nanotubes to be gripped and pulled simultaneously); (b3"') treating the carbon nanotube film/yarn with an organic solvent or mechanical force to form a carbon nanotube wire-shaped structure; and (b4"') spacing a plurality of the carbon nanotube wire-shaped structure on the base 22, thereby forming the transparent conductive layer 24.

The steps (b1"') and (b2"') are similar as the steps (b1") and (b2") for forming the drawing carbon nanotube film. The different is the drawing carbon nanotube yarn has a relatively narrower width than the drawing carbon nanotube film.

In step (b3"'), the carbon nanotube film/yarn is soaked in an organic solvent. Specifically, the carbon nanotube film/yarn can be treated by applying organic solvent to the carbon nanotube film/yarn to soak the entire surface of the carbon nanotube film/yarn. Since the untreated carbon nanotube film/yarn comprises a number of carbon nanotubes, the untreated carbon nanotube structure has a high surface area to volume ratio and thus may easily become stuck to other objects. During the surface treatment, the carbon nanotube film/yarn is shrunk into a carbon nanotube wire-shaped structure after the organic solvent is volatilized, due to factors such as surface tension. The surface area to volume ratio and diameter of the treated carbon nanotube film/yarn, now a wire-shaped structure, is reduced as shown in FIG. 11. The strength and toughness of the carbon nanotube film/yarn is improved. The organic solvent may be a volatile organic solvent, such as ethanol, methanol, acetone, dichloroethane, chloroform, or any combination thereof. It is to be understood that the step (b3"') is similar as the step of organic solvent treating step in the method of forming the drawing carbon nanotube step. The different is, in step (b3"'), before treating, the carbon nanotube film/yarn is not adhered on the surface of the base.

In step (b3"'), further or alternatively, the carbon nanotube film/yarn can be treated with mechanical force (for example, a conventional spinning process), to acquire a carbon nanotube wire-shaped structure in a twisted shape as shown in FIG. 12.

In step (b4"'), the distances between the carbon nanotube wire-shaped structure can be set according to the desired optical transparency properties of the touch panel. In the present embodiment, the distances between the carbon nanotube wire-shaped structures are substantially uniform, and such distance is approximately in range from 5 nm to 1 mm.

In one particular embodiment, the substantially uniform distance between the carbon nanotube wire-shaped structure is approximately in the range from 10 nm to 1 mm, and the carbon nanotube wire-shaped structure are parallel to each other.

When the base 22 is flexible, the method for forming the touch panel 20 can further includes a hot pressing step (d).

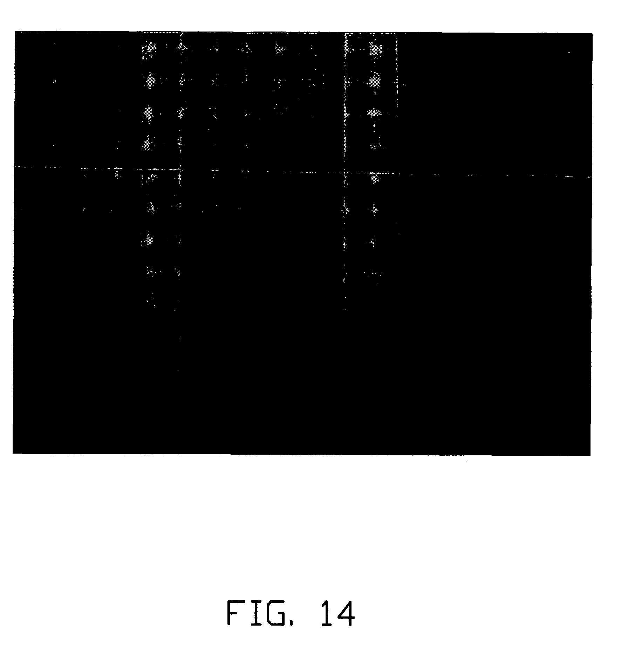

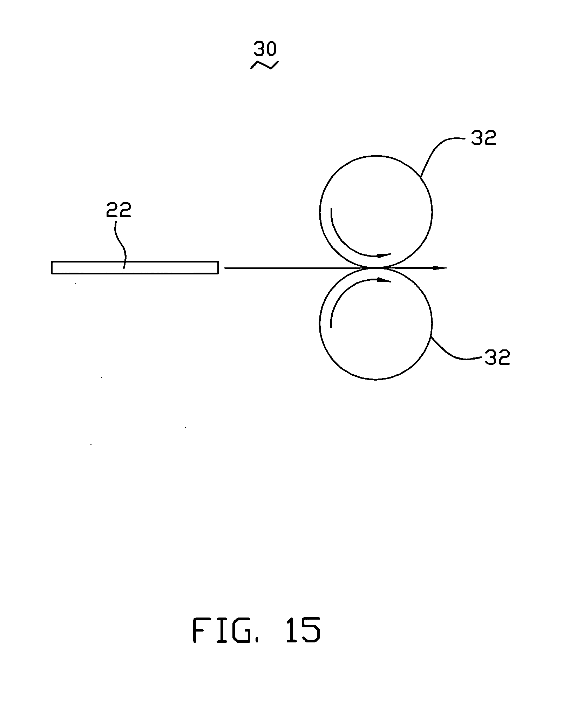

Referring to FIG. 14 and FIG. 15, after forming the carbon nanotube structure on the flexible base 22, the flexible base 22 with the carbon nanotube structure is disposed in a hot pressing device 30. The hot pressing step (d) includes the following steps:

(d1) disposing the flexible base 22 coated with a carbon nanotube structure on the hot-press device 30; (d2) heating a pressing device of the hot-press device 30; and (d3) applying heat and pressure to the flexible base 22 by the pressing device 32.

In step (d1), the hot-press device 30 includes a pressing device (not labeled) and a heating device (not shown). In the present embodiment, the hot-press device 30 is a hot-press machine, and the pressing device includes two pressing device 32.

In step (d2), the heating device is used to heat the pressing device. A temperature of the pressing device is in an approximate range from 110°C to 120°C.

In step (d3), the flexible base 22 coated with the carbon nanotube structure is slowly passed through the pressing device 32. The speed of the flexible base 22 is in the range from about 1 millimeter per minute to 10 meters per minute. In the present embodiment, a certain pressure is applied to the flexible base 22 by the heated pressing device 32, in order to soften the flexible base 22. As such, air between the carbon nanotube structure and the flexible base 22 is pressed out of the flexible base 22, and the carbon nanotube structure firmly adheres on the surface of the flexible base 22.

It is to be noted that when the low melting point material is sandwiched between the flexible base 22 and the carbon nanotube structure, in the process of pressing the flexible base 22, the carbon nanotube structure is adhered to the flexible base 22 by the low melting point material.

In the present embodiment, the carbon nanotube structure can be formed on the base 22 by the following steps of: forming a carbon nanotube structures; applying the carbon nanotube structure on a surface of the base 22; locating the base 22 with the carbon nanotube structure thereon on the hot-press device 30 having the pressing device 32; heating the pressing device 32 of the hot-press device 30; and squeezing of the base 22 by the pressing device 32 respectively.

Unlike previous methods for making an ITO film, the above-described methods do not require a vacuum environment and heating processing. Thus the carbon nanotube structure and used as the transparent conductive layer 24 has the advantage of being low cost, environmentally safe, and energy efficient.

In step (c), the electrodes 28 can be adhered on the carbon nanotube structure. The electrodes 28 are strip-shaped, and can be formed by metallic layers, conductive resin layers, carbon nanotube films or any other suitable materials. The electrodes are disposed on a surface that faces away from the flexible base 22. When the electrodes 28 are made from metal, the electrodes are formed by one or more of spraying, electrical deposition, and electroless deposition methods. The electrodes 28 can alternatively be disposed between the carbon nanotube structure and the flexible base 22, provided that the electrodes 28 are electrically connected with the carbon nanotube structure.

Furthermore, in order to prolong operational life span and restrict coupling capacitance of the touch panel 20, a transparent protective film 26 can be disposed on the electrodes 28 and the transparent conductive layer 24. The material of the transparent protective film 26 can be selected from a group consisting of silicon nitride, silicon dioxide, benzocyclobutenes, polyester film, and polyethylene terephthalate. The transparent protective film 26 can be a plastic film and receives a surface hardening treatment to protect the electrodes 28 and the transparent conductive layer 24 from being scratched, when in use.

The touch panel 20 can further include a shielding layer 25 disposed on a surface of the flexible base that faces away from the carbon nanotube structure. The material of the shielding layer 25 can be indium tin oxide, antimony tin oxide, carbon nanotube film, and/or another conductive material or materials. In the present embodiment, the shielding layer 25 is a drawing carbon nanotube film. The carbon nanotube film includes a plurality of carbon nanotubes, and the orientation(s) of the carbon nanotubes therein may be arbitrarily determined. In one embodiment, the carbon nanotubes in the carbon nanotube film are arranged parallel to a same direction. The carbon nanotube film is connected to ground and acts as shielding, thus enabling the touch panel to operate without interference, (e.g., electromagnetic interference).

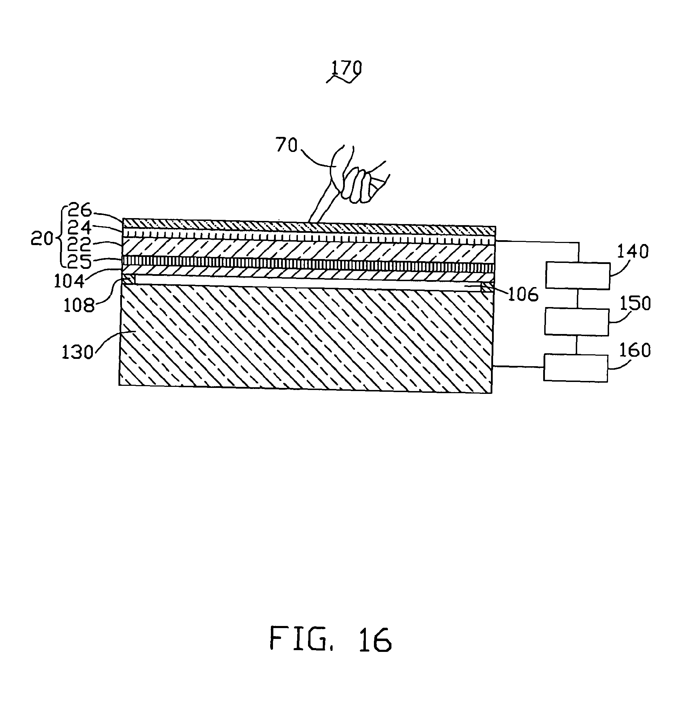

Referring to FIGS. 16 and 2, a display device 100 includes the touch panel 20, a display element 130, a touch panel controller 140, a central processing unit (CPU) 150, and a display element controller 160. The touch panel 20 is connected to the touch panel controller 140 by an external circuit. The touch panel 20 can be spaced from the display element 130 by an intervening gap 106 or, alternatively, can be installed directly on the display element 130. The touch panel controller 140, the CPU 150, and the display element controller 160 are electrically connected. The CPU 150 is connected to the display element controller 160 to control the display element 130.

The display element 130 can be, e.g., a liquid crystal display, field emission display, plasma display, electroluminescent display, vacuum fluorescent display, cathode ray tube, or other display device.

When the shielding layer 25 is disposed on the second surface 222 of the base 22, a passivation layer 104 is disposed on and in contact with a surface of the shielding layer 25 that faces away from the base 22. The material of the passivation layer 104 can, benefically, be silicon nitride or silicon dioxide. The passivation layer 104 can be spaced at a distance from the display element 130 or instead can be directly installed on the display element 130. When the passivation layer 104 is spaced at a distance from the display element 130, understandably, two or more spacers 108 can be used. Thereby, the gap 106 is provided between the passivation layer 104 and the display element 130. The passivation layer 104 protect the shielding layer 25 from chemical damage (e.g., humidity of the surrounding) or mechanical damage (e.g., scratching during fabrication of the touch panel).

In operation, a voltage is applied to the electrodes 28. A user operates the display device 100 by pressing or touching the transparent protective film 26 of the touch panel 20 with a touch tool, such as a finger or an electrical pen/stylus 170, while visually observing the display element 130 through the touch panel 20. In the illustration, the touch tool is the user's finger 170. Due to an electrical field of the user, a coupling capacitance forms between the user and the transparent conductive layer 24. For high frequency electrical current, the coupling capacitance is a conductor, and thus the touch tool 170 takes away a little current from the touch point. Currents flowing through the four electrodes 28 cooperatively replace the current lost at the touch point. The quantity of current supplied by each electrode 28 is directly proportional to the distances from the touch point to the electrodes 28. The touch panel controller 140 is used to calculate the proportion of the four supplied currents, thereby detecting coordinates of the touch point on the touch panel 20. Then, the touch panel controller 140 sends the coordinates of the touch point to the CPU 150. The CPU 150 receives and processes the coordinates into a command. Finally, the CPU 150 sends out the command to the display element controller 160. The display element controller 160 controls the display of the display element 130 accordingly.

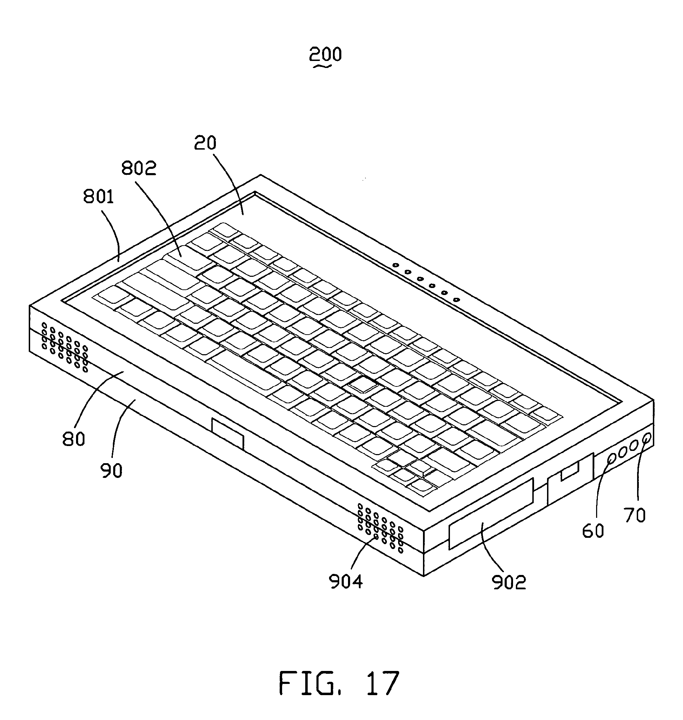

Referring to FIG. 17, a portable computer 200 using the display device 100, in accordance with a present embodiment is provided. The portable computer 200 includes a display screen 80, a host computer 90 and the touch panel 20. The display screen 80 includes a displaying surface 801. The host computer 90 is located on a surface of the display screen 80 departing from the displaying surface 801. The touch panel 20 is located on the displaying surface 801. The display screen 80 can be selected from a group consisting of liquid crystal display screen, field emission display screen and plasma display screen, electroluminescent display screen and vacuum fluorescent display screen. The display screen 80 is used to display output data and images of the host computer 90. In the present embodiment, the display screen 80 is a liquid crystal display screen. Connection among the display screen 80, the host computer 90, and the touch panel 20 are be realized by internal input port (not label) and output port (not label). In the present embodiment, the touch panel 20 is electrically connected to the host computer 90, and the display screen 80 is electrically connected to the host computer 90 by the internal input ports and output ports. It can be understood that at least one of the external input port 60 and at least one output port 70 can be located at one side of the host computer 90 and used to input signals to the host computer 90.

The host computer 90 includes a mainboard, a central processing unit (CPU), memory, and hard drive components, and so on. The central processing unit (CPU), and memory are located on the mainboard. The hard drive components are electrically connected to the mainboard by a cable. Further, a speaker 904 and disk drives 902 are located on a side of the host computer 90.

The touch panel 20 plays a role of inputting signals. The touch panel 20 can be adhered on the displaying surface 801 by an adhesive. It can be understood that a plurality of touch panels 20 can be located on the displaying surface 801 when an area of the touch panel 20 is smaller than that of the displaying surface 801. Further, a keyboard 802 can be shown on the displaying surface 801 considering of diversifying the input of information.

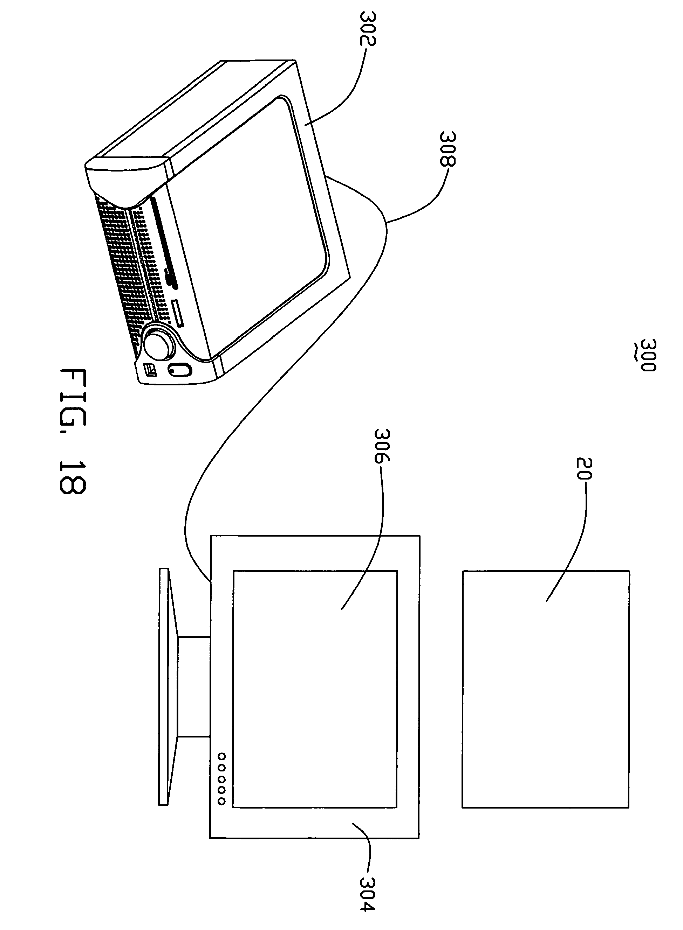

Referring to FIG. 18, a desktop computer 300 using the display device, in accordance with a present embodiment is provided. The desktop computer 300 includes a host computer 302, a display 304, and the touch panel 20. The display 304 is connected to the host computer 302 via a date wire 308. The display 304 includes a display screen 306. The touch panel 20 is located on a surface of the display screen 306.

The host computer 302 includes a mainboard, a central processing unit (CPU), memory, and hard drive components, and so on. The central processing unit (CPU), and memory are located on the mainboard. The hard drive components are electrically connected to the mainboard by a cable. At least two of the external input/output port (not shown) can be located at one side of the host computer 302 and used to connect with the display 304 and the touch panel 20 and other device thereto. Further, a speaker (not labeled) and disk drives (not labeled) are located on a side of the host computer 302.

The display 304 can be selected from a group consisting of liquid crystal display, field emission display and plasma display, electroluminescent display and vacuum fluorescent display. The display 304 is used to display output data and images of the host computer 302. In the present embodiment, the display 304 is a liquid crystal display screen.

The touch panel 20 plays a role of inputting signals. The touch panel 20 can be spaced from the display 304 or installed directly on the display 304. The touch panel 20 can be adhered on the display screen 306 of the display 304 by an adhesive. In the present embodiment, the touch panel 20 and the display 304 use a same base.

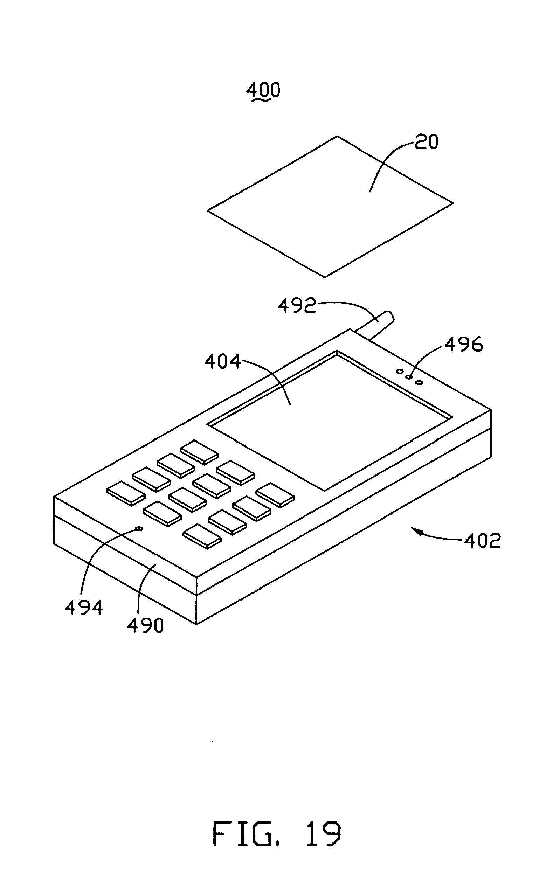

Referring to FIG. 19, a mobile phone 400, in accordance with a present embodiment is provided. The mobile phone 400 includes a body 402 and a touch panel 20. The body 402 includes a display screen 404. The touch panel 20 is located on a surface of the display screen 404 departing from the body 402.

The body 402 further includes a shell 490, a communication system, a central processing unit (CPU) (not shown), a storage unit (not shown) and a control unit (not shown). The communication system includes an antenna 492, a microphone 494 and a speaker 496. The central processing unit, the storage unit, the control unit, and the microphone 494, the speaker 496 and the display screen 404 are all located in the shell 490. The antenna 492 can be located in the shell 490 or extending out from the shell 490. The storage unit, the central processing unit and the control unit can locate on a integrated circuit board (not shown). The storage unit and the control unit are electrically connected to the central processing unit by a conductive wire on the integrated circuit board. The antenna 492, the microphone 494 and the speaker 496, the display screen 404 and the touch panel 20 are connected to the control unit. The control unit can includes a touch panel control unit, a display screen control unit, a communication control unit and other functional control units to control the touch panel 20, the display screen 404 antenna 492, the microphone 494, the speaker 496, and other functional device. The storage unit can further include a read-only memory, and a random access memory.

The display screen 404 can be selected from a group consisting of liquid crystal display screen, field emission display screen and plasma display screen, electroluminescent display screen and vacuum fluorescent display screen. In the present embodiment, the display screen 404 is a liquid crystal display screen.

The touch panel 20 plays a role of inputting signals. The touch panel 20 can be spaced from the display screen 404 or installed directly on the display screen 404. The touch panel 20 can be adhered on the display screen 404 by an adhesive. In the present embodiment, the touch panel 20 and the display screen 404 use a same base. Further, a keyboard (not shown) can be shown on the display screen 404 considering of diversifying the input of information.

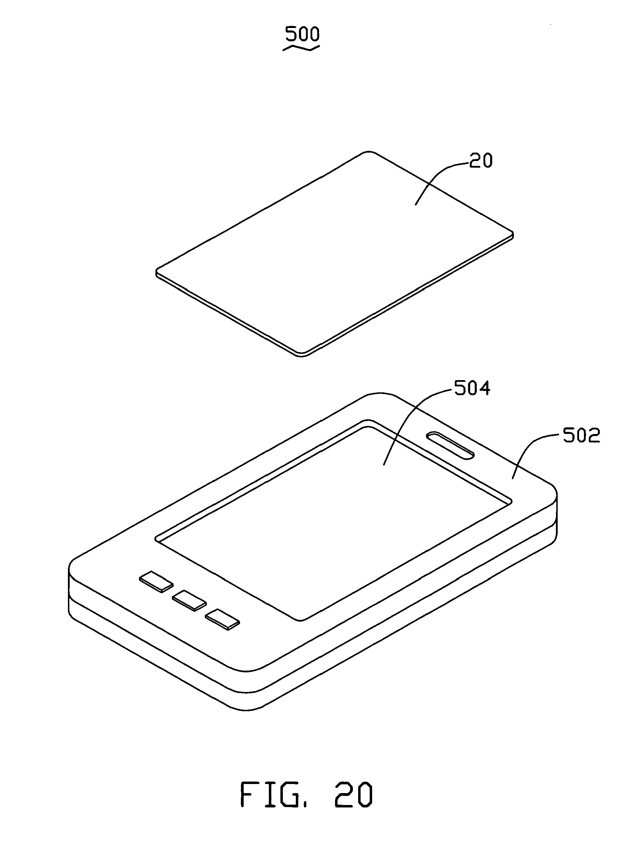

Referring to FIG. 20, a personal digital assistant 500 using the display device, in accordance with a present embodiment is provided. The personal digital assistant 500 includes a body 502 and the touch panel 20. The body 502 includes a display screen 504. The touch panel 20 is located on a surface of the display screen 504.

The body 502 further includes a shell (not shown), a central processing unit (CPU) (not shown), a storage unit (not shown) and a control unit (not shown). The central processing unit, the storage unit, the control unit, and the display screen are all located in the shell. The storage unit, the central processing unit and the control unit can locate on a integrated circuit board (not shown). The storage unit and the control unit are electrically connected to the central processing unit by a conductive wire on the integrated circuit board. The display screen 504 and the touch panel 20 are connected to the control unit. The control unit can includes a touch panel control unit, a display screen control unit and other functional control units to control the touch panel 20, the display screen 504 and other functional device, such as thin notebook, dictionary, and communications. The storage unit can further include a read-only memory, a random access memory, and a programmable memory.

The display screen 504 can be selected from a group consisting of liquid crystal display screen, field emission display screen and plasma display screen, electroluminescent display screen and vacuum fluorescent display screen. In the present embodiment, the display screen 504 is a liquid crystal display screen.

The touch panel 20 plays a role of inputting signals. The touch panel 20 can be spaced from the display screen 504 or installed directly on the display screen 504. The touch panel 20 can be adhered on the display screen 504 by an adhesive. In the present embodiment, the touch panel 20 and the display screen 504 use a same base. Further, a keyboard (not shown) can be shown on the display screen 504 considering of diversifying the input of information.

The properties of the carbon nanotubes provide superior toughness, high mechanical strength, and uniform conductivity to the carbon nanotube film. Thus, the touch panel and the display device using the same adopting the carbon nanotube film are durable. Furthermore, when a flexible base is used in the touch panel, a flexible touch panel is obtained and thus this can be applied to a flexible display element. Further, since the carbon nanotubes have excellent electricity conductive property, the carbon nanotube layer, formed by a plurality of carbon nanotubes oriented along a same direction and uniformly distributed therein, has a uniform resistance distribution and thus the touch panel and the display device using the same adopting the carbon nanotube structure have an improved sensitivity and accuracy. Furthermore, the pulling method for fabricating the carbon nanotube film is simple, and the adhesive carbon nanotube film can be located directly on the base. As such, the method for fabricating the carbon nanotube film is suitable for the mass production of touch panels and display device using the same and reduces the cost thereof. Furthermore, the carbon nanotube film has a high transparency, thereby promoting improved brightness of the touch panel and the display devices using the same. Furthermore, the flocculating method for fabricating the carbon nanotube structure is simple. As such, the method for fabricating the carbon nanotube structure is suitable for the mass production of touch panels and display device and reduces the cost thereof. Furthermore, the carbon nanotube structure has a microporous structure containing a plurality of micropores, whose diameters are less than 10 micrometers. Thus, the carbon nanotube structure has high transparency, thereby promoting improved brightness of the touch panel and the display device. Furthermore, the method for making the carbon nanotube films via pressing the carbon nanotube array using a pressing device is also simple, without the need for a vacuum or heating processes. Accordingly, the touch panel and the display device can be manufactured inexpensively. Finally, since the carbon nanotubes has superior toughness and high mechanical strength, so the electrodes made of carbon nanotubes has superior toughness and high mechanical strength. Therefore it is conducive to improve the durable of the touch panel and display device adopting the same.

It is to be understood that the above-described embodiments are intended to illustrate rather than limit the invention. Variations may be made to the embodiments without departing from the spirit of the invention as claimed. The above-described embodiments illustrate the scope of the invention but do not restrict the scope of the invention.

It is also to be understood that the above description and the claims drawn to a method may include some indication in reference to certain steps. However, the indication used is only to be viewed for identification purposes and not as a suggestion as to an order for the steps.

## Claims

1. A touch panel comprising:
a base comprising a first surface;
a transparent conductive layer disposed on the first surface of the base, the transparent conductive layer comprising a carbon nanotube structure; and
at least two electrodes electrically connected with the transparent conductive layer.

2. The touch panel as claimed in claim 1, wherein the carbon nanotube structure comprises a plurality of ordered carbon nanotubes distributed uniformly therein, and the ordered carbon nanotubes are primarily oriented along a same direction or along several directions.

3. The touch panel as claimed in any one of claims 1 to 2, wherein the carbon nanotube structure comprises at least one carbon nanotube film, the carbon nanotube film is formed by drawing from an array of carbon nanotubes, and the carbon nanotube film further comprises a plurality of successive carbon nanotubes joined end to end by van der Walls attractive force therebetween and the carbon nanotubes in the carbon nanotube film are primarily aligned along a same direction.

4. The touch panel as claimed in any one of claims 1 to 3, wherein the carbon nanotube structure comprises at least two layer of carbon nanotube films stacked with each other, and an angle between the aligned directions of the carbon nanotubes in the two adjacent carbon nanotube films approximately ranges from above or equal to 0 ° to less than or equal to 90 °.

5. The touch panel as claimed in any one of claims 1 to 4, wherein the electrodes are disposed at opposite sides of the carbon nanotube structure, and the carbon nanotubes in the carbon nanotube structure are aligned from one electrodes to another electrodes.

6. The touch panel as claimed in any one of claims 3 to 4, wherein a thickness of the carbon nanotube film approximately ranges from 0.5 nanometers to 100 micrometers.

7. The touch panel as claimed in claim 1, wherein the carbon nanotube structure comprises a plurality of disordered carbon nanotubes distributed uniformly therein, and the disordered carbon nanotubes are entangled with each other or parallel to a surface of the carbon nanotube structure.

8. The touch panel as claimed in any one of claims 1 to 7, wherein a material of the electrodes is selected from a group consisting of metal, alloy, conductive polymer, carbon nanotubes and any combination thereof.

9. The touch panel as claimed in any one of claims 1 to 8, wherein a material of the base is selected from a group consisting of polycarbonate, polymethyl methacrylate, polyethylene terephthalate, PES, cellulose acetate, benzocyclobutene, polyvinyl chloride and any other acrylic resins, and combinations thereof.

10. The touch panel as claimed in claim 1, wherein the carbon nanotube structure comprises a plurality of carbon nanotube strip-shaped film structures or a plurality of carbon nanotube wire-shaped structures.

11. The touch panel as claimed in claim 1 or 10, wherein two opposite ends of each carbon nanotube strip-shaped film structure or carbon nanotube wire-shaped structure are electrically connected to the two opposite electrodes.

12. A method for making a touch panel, the method comprising the following steps of:
(a) providing an insulating base;
(b) forming a carbon nanoatube structure on a surface of the base;
(c) creating at least two separate electrodes electrically connected to the carbon nanotube structure.

13. The method as claimed in claim 12, wherein after step (b), an additional step of hot-pressing the base with the carbon nanotube structure thereon is further executed.

14. A display device comprising:
a touch panel comprising:
a base comprising opposite first surface and second surface;
a transparent conductive layer disposed on the first surface of the base, the transparent conductive layer comprising a carbon nanotube structure; and
at least two electrodes electrically connected with the transparent conductive layer; and
a display element positioned adjacent to the second surface of the base of the touch panel.

15. The display device as claimed in claim 14, wherein the display element is selected from one display device of personal digital assistants, desktop computers, portable computers, and mobile phones.
